**Europäisches Patentamt**

**European Patent Office**

**Office européen des brevets**

(19)

(11) **EP 1 041 738 A1**

(12) **EUROPEAN PATENT APPLICATION**

(43) Date of publication:
**04.10.2000 Bulletin 2000/40**

(51) Int Cl.⁷: $H04B\ 7/185$

(21) Application number: **99302487.6**

(22) Date of filing: **30.03.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **ICO Services Ltd.**
**London W6 9BN (GB)**

(72) Inventors:
• **Grayson, Mark**
**Chiswick, London W4 2QT (GB)**

• **Le Goff, Tania**
**London W11 4SL (GB)**
• **Lu, Sze-Ching**
**Sutton, Surrey SM1 2TJ (GB)**

(74) Representative: **Geary, Stuart Lloyd et al**
**Venner, Shipley & Co.,**
**20 Little Britain**
**London EC1A 7DH (GB)**

(54) **Doppler correction for a high-speed mobile station in a satellite mobile telephone system**

(57)     Doppler-shift correction information broadcast in a satellite mobile telephone system is produced on the assumption that mobile stations (4a, 4b) are stationary or moving slowly. Consequently, a mobile station (4a, 4b) moving at high-speed cannot correct properly for Doppler shift. In order to solve this problem, provision is made for the mobile station (4a, 4b) to know its own position and velocity, as well as that of a satellite (3a, 3b), so that it can tune its transmitter to mimic, from the perspective of the satellite (3a, 3b), a stationary or slowly moving mobile station (4a, 4b).

Figure 8

**Description**

The present invention relates to a method of operating a mobile station in a satellite mobile telephone system and a mobile station for a satellite mobile telephone system.

Various proposals have been made for satellite mobile telephone systems. These include the Inmarsat-M system, the IRIDIUM™ system described in EP-A-0365885, the ICO™ system described in GB-A-2295296 and the ODYSSEY™ system described in EP-A-0510789.

A known satellite mobile telephone system uses an adaptive Doppler compensation scheme to compensate for the large relative velocity between a mobile station and a satellite. In this system, Doppler correction information is transmitted to mobile stations and the mobile stations use this information to adjust their oscillators for both transmission and reception. A problem arises, however, because the Doppler correction information is generated on the assumption that the mobile stations will be stationary or moving slowly. If the mobile station is moving at a high speed, e.g. greater than 100km/h, as would be the case if the mobile station were located in an aeroplane or in a high-speed train, the Doppler correction information is inapplicable because it does not take account of the high speed of the mobile station. Consequently, transmissions from the mobile station will be outside the bandwidth of the satellite's receiver for the channel being used.

According to the present invention, there is provided a method of operating a mobile station in a satellite mobile telephone system, the method comprising the steps of:-

obtaining mobile station data defining the position and velocity of the mobile station;
calculating the Doppler shift for transmissions between the mobile station and a satellite from the mobile station data and satellite data defining the position and velocity of the satellite; and
transmitting to a satellite using a frequency determined by said calculated Doppler shift so as to pre-compensate for Doppler shift affecting the transmission.

The pre-compensation for Doppler shift means that the signal transmitted to a satellite will be received within the bandwidth of the appropriate receiver of the satellite or ground station, if the satellite carries a simple transposer, even when being propelled at a speed not less than 100km/h.

The mobile station may be pre-programmed with a definition of the orbit of a satellite and generate the satellite data from this and the current time. However, it is preferred that the mobile station receives the satellite data from a satellite.

More preferably, in idle mode, the satellite data is received in a broadcast control channel so that the mobile station can transmit to a satellite, which may or may not be the satellite transmitting said broadcast control channel, in a random access channel to the satellite that transmitted the satellite data. The satellite data may relate to a plurality of satellites. In dedicated mode, however, it is preferred that the satellite data is received in a control channel during dedicated mode operation. This data can be used to apply pre-compensation for Doppler shift for communication with the satellite sending the satellite data or with another satellite, such as would be necessary during handover between cells served by different satellites or with a plurality of satellites when operating in a path diversity mode.

Preferably, the mobile station data is obtained from a navigation apparatus, although the mobile station could also perform the functions of a navigation apparatus. The navigation apparatus preferably comprises a GPS (Global Positioning System) terminal apparatus, more preferably a handheld device. However, it could be the navigation apparatus of an aircraft which might be inertial rather than relying on GPS satellite transmissions.

Preferably, the satellite data comprises velocity data for a satellite. Satellite position information may also be included in the satellite data. More preferably, the satellite data includes acceleration data for the satellite and a timestamp.

According to the present invention, there is also provided a mobile station for a satellite mobile telephone system, the mobile station including a controller programmed to cause the mobile station to operate according to a method according to the present invention.

Preferably, the mobile station includes a mobile telephone, a navigation apparatus and communication means for effecting communication between the mobile station and the navigation apparatus. The navigation apparatus preferably comprises a GPS (Global Positioning System) terminal apparatus, more preferably a handheld device. However, it could be the navigation apparatus of an aircraft which might be inertial rather than relying on GPS satellite transmissions.

According to the present invention, there is also provided a combination of mobile station according to the present invention and transport means for propelling the mobile station at a speed not less than 100km/h.

The transport means may comprise an aircraft. However, the present invention may be used to provide a communication link to a satellite in low earth orbit. In this case, the mobile station is mounted to the low earth orbit satellite and can be called via the satellite mobile telephone network.

An embodiment of the present invention will now be described, by way of example, with reference to the accompanying drawings, in which:-

Figure 1 illustrates a satellite mobile telephone system;
Figure 2 shows a mobile station;
Figure 3 is a schematic diagram of a satellite access node of the system of Figure 1;
Figure 4 is a data flow diagram for the system of Figure 1;
Figure 5 is a plot of propagation time versus distance from satellite nadir;
Figure 6 is a plot of Doppler shift versus distance along satellite ground track from its nadir;
Figure 7 illustrates the geometries of cells served by a satellite;
Figure 8 illustrates a high-speed mobile station in a satellite mobile telephone system;
Figure 9 illustrates a mobile station for performing a method according to the present invention;
Figure 10 illustrates the geometry of the Doppler calculations of the present invention; and
Figure 11 is a flow chart illustrating a method according to the present invention.

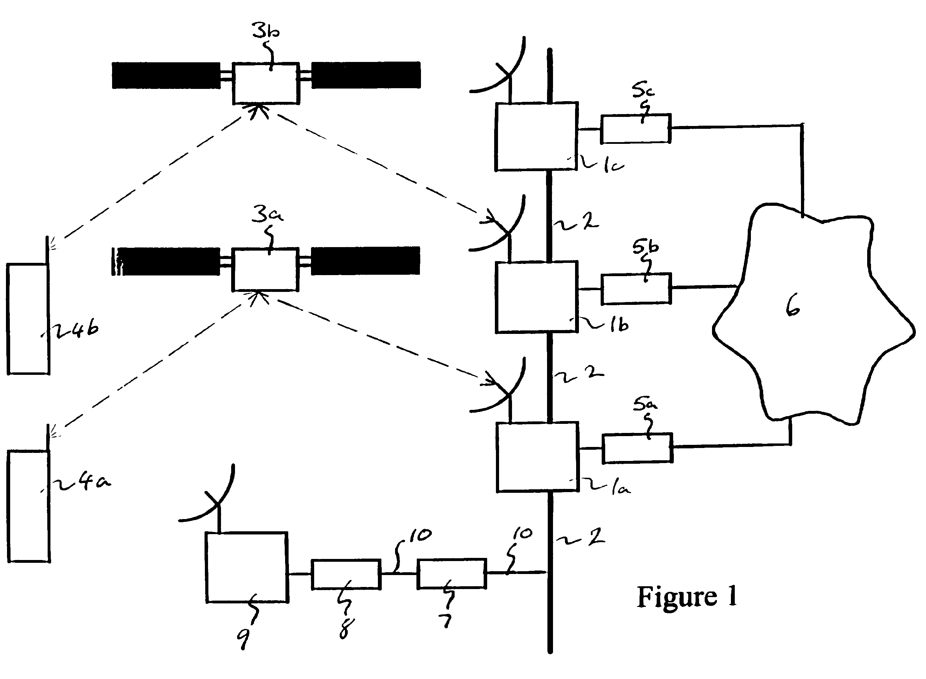

Referring to Figure 1, a satellite mobile telephone system comprises a plurality of satellite access nodes 1a, 1b, 1c interconnected by a high capacity digital network 2 (hereinafter "the backbone network"), a plurality of satellites 3a, 3b, a plurality of a mobile stations 4a, 4b, gateway mobile satellite switching centres 5a, 5b, 5c providing connections between the satellite access nodes 1a, 1b, 1c and other networks 6, a network management centre 7, a satellite control centre 8 and a tracking, telemetry and control station 9. The network management centre 7, the satellite control centre 8 and the tracking, telemetry and control station 9 are interconnected by a lower capacity digital network 10 which is also connected to the backbone network 2. The other networks 6 comprise the public switched telephone network (PSTN), cellular telephone networks and the like.

The satellite control centre 8 and the tracking, telemetry and control station 9 control the operation of the satellites 3a, 3b, for instance setting transmit power levels and transponder input tuning, as directed by the network management centre 7. Telemetry signals from the satellites 3a, 3b are received by the tracking, telemetry and control station 9 and processed by the satellite control centre 8 to ensure that the satellites 3a, 3b are functioning correctly.

The satellites 3a, 3b repeatedly broadcast control information in broadcast control channels (BCCH). A mobile station 4a repeatedly receives and decodes the information in the BCCH broadcast by the satellite 3a, 3b currently serving it.

During a telephone call, a mobile station 4a, 4b communicates with a satellite 3a, 3b via a half duplex channel comprising a downlink channel and an uplink channel. The channels comprise TDMA time slots on frequencies allocated on initiation of the call or re-allocated during a call.

The satellites 3a, 3b are in non-geostationary orbits and comprise generally conventional satellites, such as the known Hughes HS601 model, and may include features as disclosed in GB-A-2288913. Each satellite 3a, 3b is arranged to generate an array of beams covering a footprint beneath the satellite, each beam including a number of different frequency channels and time slots.

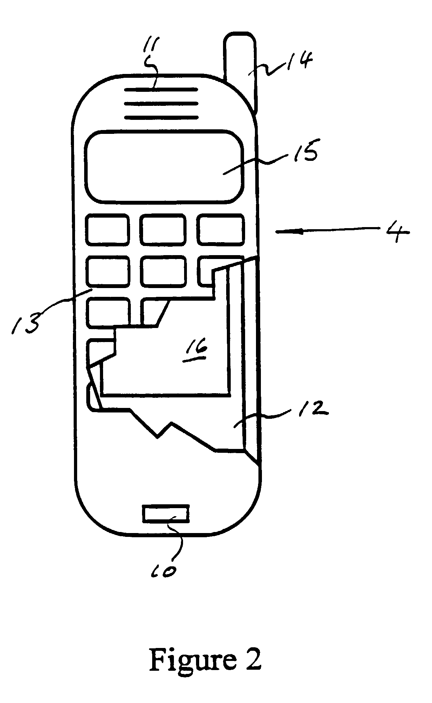

Referring to Figure 2, a mobile station 4 is generally similar to the units presently available for GSM networks and comprises a codec, a controller 16, a microphone 10, a loudspeaker 11, a battery 12, a keypad 13, a radio frequency interface, an antenna 14, a display 15 and subscriber identification module (SIM) smart card.

The codec comprises a low bit-rate coder, which generates a speech bit stream at 3.6 kbits/s, together with a channel coder, which applies error correction codes to the speech bit stream to produce an encoded bit stream at 4.8 kbits/s. The low bit-rate coder is a linear predictive coder. The channel coder uses Viterbi coding. The codec also comprises complementary decoders.

The SIM includes a processor and a non-volatile memory which stores data identifying the subscriber and data for use in encrypted communication.

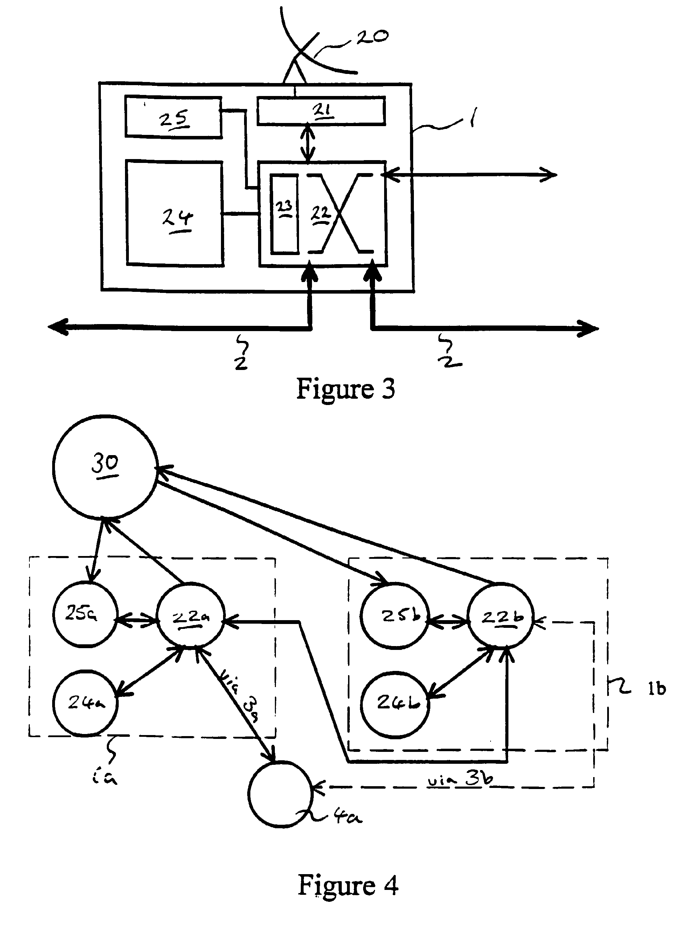

Referring to Figure 3, a satellite access node 1 comprises a dish antenna 20 mounted for tracking satellites, transmitter and receiver circuits 21 including amplifiers, multiplexers, demultiplexers and codecs, a visited mobile satellite switching centre 22 including a controller 23, a visitor location register 24 and a voice mail box unit 25. The mobile satellite switching centre 22 is coupled for communications signals to the backbone network 2, to a gateway and to the transmitter and receiver circuits 21. The controller 23 is coupled for data signals to the visitor location register 24 and the voice mail box unit 25 and may also send and receive data signals via the backbone network 2.

The controller 23 responds to addresses on incoming communications signals, from the antenna 20, the gateway and the backbone network 2, by controlling the mobile satellite switching centre 22 to output the communications signals on the appropriate paths to their destinations, i.e. the antenna 20, the gateway or the backbone network 2.

The visitor location register 25 maintains a record of each of the subscribers registered with the satellite access node 1. The voice mail box unit 24 provides storage space for voice mail messages for subscribers.

Referring to Figure 4, a database 30, called the home location register, contains records relating to each mobile station 4a, 4b. The record contains the mobile station's identity (International Mobile Subscriber Identity or IMSI) and the current address of the visitor location register 25a, 25b where the mobile station 4a, 4b is registered. The visitor location register 25a, 25b contains a part copy of the home location register information (e.g. which services are subscribed to), the status of the mobile station (whether it is "local" or "global") the geographical position of the mobile station, the address of home location register where the mobile station is a subscriber (to enable billing and other data to be collected at a single point), the currently active satellite access node with which the mobile station is in communication via a satellite, an individual enciphering key and the address of an associated voice mail box unit location.

The home location register 30 may be located in the network management centre 7 (see Figure 1) or may be distributed among the satellite access nodes 1a, 1b, 1c (see Figure 1) or may be in another network, e.g. when a GSM subscriber roams onto the satellite network.

Referring to Figures 1 to 4, a mobile station 4a may be registered with one of two distinct statuses; "local" in which the mobile station 4a is permitted to communicate only through one local area or part of the satellite system network, and "global", which entitles the mobile station 4a to communicate through any part of the satellite mobile telephone system.

The mobile station 4a performs an automatic registration process (location update), of the kind well known in the art of cellular terrestrial communications, optionally on each occasion when the mobile station 4a is used for an outgoing call, when the mobile station 4a is switched on, periodically whilst the mobile station 4a is operating and when the mobile station 4a has been unpageable for a predetermined period. As is conventional, the location update takes the form of transmitting of a signal identifying the mobile station 4a (e.g. by transmitting its telephone number on a random access channel). The mobile station 4 decides to camp on a particular cell on the basis of measurements of signals on beacon frequencies and the random access channel used is the one associated with the cell on which the mobile station 4 decides to camp.

The transmitted signal is picked up by one of the satellites 3a. From the received random access channel signal, the satellite access node 1a serving the satellite 3a which sets up a dedicated channel for the mobile station 4a. From the random access channel signal, the satellite access node 1a derives the propagation path time and Doppler shift and communicates this to the mobile station 4a in an immediate assignment message, on the assumption that the mobile station 4a will be moving at less than 100km/h. The propagation time is actually send as the difference between actual propagation time and a reference propagation time.

The first message sent on the assigned channel by the mobile station 4a is the "initial message" and when this is received the satellite access node 1a, calculation of the mobile station's position using the propagation time and Doppler data is triggered. The position of the mobile station 4a is added to the "initial message" which is then passed on to the visitor location register 25a where the mobile station 4a is registered.

At this stage, the visitor location register 25a can be used to confirm that the mobile station 4a has a subscription for service in the area for which it is located or conversely when first registering with the visitor location register 25a to use information provided in the initial message to derive the address of the home location register and to contact the home location register during which a part copy of the home location register information will be transferred to the visitor location register 25a and the data in the home location register which points to the visitor location register 25a is updated. The location of the mobile station 4a is thus stored in the database of the visitor location register 25a.

As the mobile station 4a and the cells move relative to one another, the visitor location register 25a may determine that the mobile station 4a should be handled via another satellite access node 1b. Consequently, the visitor location register record of the mobile station 4a is amended.

When a mobile terminated call is made to the mobile station 4a, it is directed to the visited mobile satellite switching centre 22a at which the mobile station 4a is registered. The visited mobile satellite switching centre 22a causes a paging signal to be sent to the cells where the called mobile station 4a is expected to be, i.e. via the satellites 3a, 3b serving cells covering the mobile station's location. When the mobile station 4a receives the paging signal, it enters into a dialogue with the network to obtain a channel for the call. If the mobile station 4a does not respond to the paging signal, the network will inform the calling party that the mobile station 4a cannot be reached.

When a mobile originating call is to be made, the user of the mobile station 4a enters the number to be dialled and presses a "send" key. The mobile station 4a responds by sending an access request using a random access channel on a dedicated frequency, corresponding to a cell, to the network via one visible satellite 3a, 3b. The satellite access node 1a responds on the basis of the cell from which it receives the access request. The selected satellite access node 1a sends a immediate assignment message using a access grant channel. The immediate assignment message includes the physical parameters of a stand-alone dedicated control channel assigned by the network. The radio link setup is completed using the stand-alone dedicated control channel and then the connection of the call is attempted. On connection of the call, the mobile station 4a is allocated a traffic channel that is then used for the call.

In a satellite mobile telephone system, as described above, where the satellites are in medium earth orbit, allowance must be made by the mobile stations for different propagation times between different locations and a satellite and for Doppler shifts due to the motion of a satellite. The communication of this information to a mobile station will now be described.

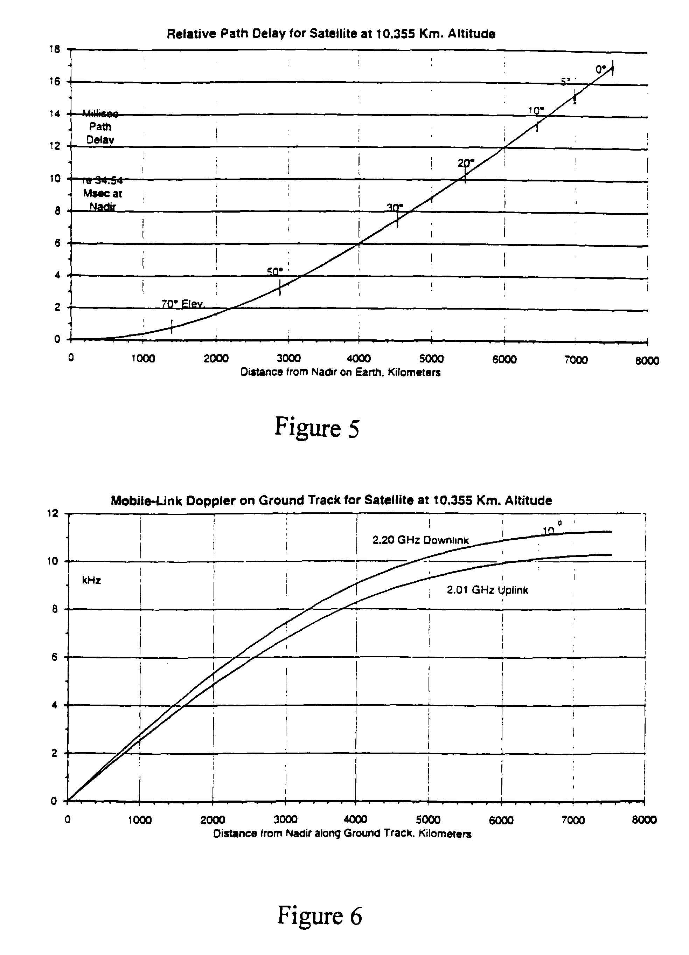

Referring to Figure 5, the propagation time between a mobile station and a satellite is a function of the radial distance between the mobile station and the satellite's nadir and of elevation. The propagation time is independent of the direction of the mobile station from the nadir and can change at up to 5.1μs s$^{-1}$. Contours of constant propagation time, called Z-arcs, are defined. In most cases, there is only one Z-arc crossing a cell. However, the more peripheral cells may be crossed by more than one Z-arc.

Referring to Figure 6, which shows the Doppler shift for a rising satellite versus distance of mobile station from the satellite's nadir along the satellite's earth track. The Doppler shift for the uplink can change at up to 4.17Hz s$^{-1}$ and that for the downlink can change at up to 4.59Hz s$^{-1}$.

The Doppler shift depends on the motion of the satellite relative to the earth's surface. For mobile stations on the projected earth track, and only there, the latitude dependent earth surface velocity and the ±45° angle variations in the compass direction of the ground track exactly offset each other. Accordingly, the Doppler shift varies only with the distance from the nadir. The maximum Doppler shift occurs on the projected ground track at the horizon. For mobile stations located off of the projected ground track, the Doppler shift varies with sub-satellite latitude. This variation is less than ±1kHz at 2.2GHz for a cell and is deterministic and predictable.

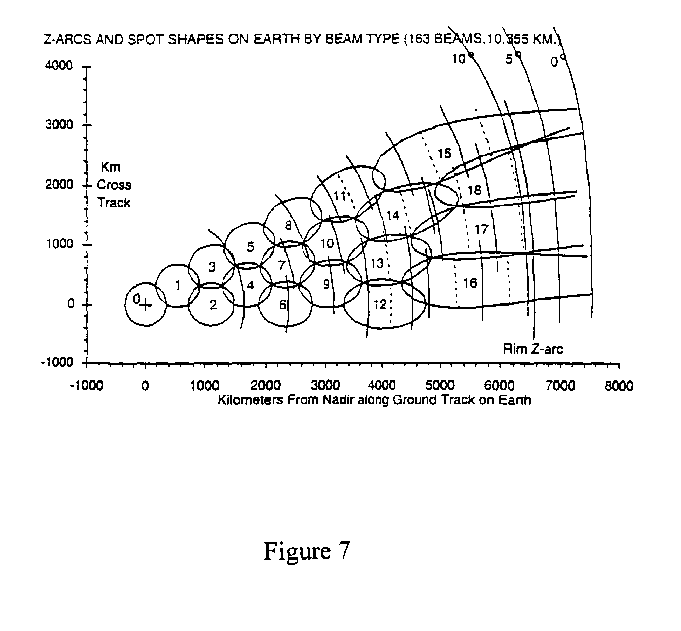

The satellite produces 163 beams, each defining one cell. There are 19 beam or cell types, as shown in Figure 7.

A mobile station acquires system time and frequency information from the broadcast control channel using a combination of energy-profile on broadcast control channel signals, fast Fourier transforms on frequency control channel signals and correlation with synchronisation data in the broadcast control channel signals. The broadcast control channel comprises a burst every 25 timeslots which is transmitted at a higher power level than traffic channel bursts. The frequency control channel comprises two bursts of unmodulated carrier in every 25 timeslots, the frequency control channel bursts immediately following a broadcast control channel burst.

For initial acquisition, the mobile station's receiver tunes between the nominal broadcast control channel frequencies used in the system. The in-phase and quadrature components of received signals are sampled at the symbol frequency and then the instantaneous power is calculated from these samples. The power values are averaged over a moving window having a duration of one burst. A broadcast control channel burst is identified when the average power exceeds a threshold value.

When the threshold value has been exceeded, the identification of a broadcast control channel burst is checked. First, using the timing of the provisionally identified broadcast control channel burst as a reference, a window is opened in the middle of the period expected to be occupied by the frequency control channel bursts and the received signal sampled. A fast Fourier transform of these samples is then calculated. If the frequency control bursts are present, a component at the carrier frequency, allowing for the effects of Doppler shift, should appear in the fast Fourier transform result.

If a potential carrier is detected in the fast Fourier transform result, the mobile station local oscillator can be adjusted exactly to the correct frequency. The broadcast control channel signal is then correlated with a synchronisation word to identify a reference point in the broadcast control channel signal.

Once the mobile station has synchronised with the broadcast control channel, it can decode the information contained in the broadcast control channel. This information includes:-

    (a) the identity of the current cell,
    (b) the location of the satellite in earth centred earth fixed co-ordinates (ECEF),
    (c) the satellite's velocity,
    (d) the satellite's acceleration,
    (e) propagation times $T_P$ between the satellite and one or each Z-arc crossing the current cell,
    (f) the Doppler shift $f_O$ applicable to the path between the satellite and a Doppler shift reference contour passing through the current cell ($f_O$ is provided together with a timestamp and a rate of change value),
    (g) the satellite transmitting the decoded broadcast control channel, the identity of neighbouring cells, and
    (h) the broadcast control channel frequencies for the neighbouring cells.

The mobile station first tries to detect and synchronise with the broadcast control channels of the neighbouring cells. The mobile station compares the strengths of the broadcast control channels detected and determines that it is in the cell, served by the strongest broadcast control channel signal which, if possible, is not on the satellite's ground track.

Once the mobile station has selected a broadcast control channel, it decodes the remaining broadcast control channel information. The mobile station will generally not be on a Z-arc and allowance must therefore be made for variations in actual propagation time ($T_P$) corresponding to the mobile station's position relative to the closest Z-arc.

After decoding the broadcast control channel information, the mobile station transmits a random access channel burst via the satellite to the satellite access node serving the satellite. The random access channel has a dedicated frequency different from that used for other channel types.

The transmissions from a satellite 3a, 3b are pre-compensated for Doppler shift. That is the nominal transmit frequency ($f_N$) is modified by the reference Doppler shift value ($f_O$). (In the following, $f_O$ is the instantaneous value which the mobile station calculates from the broadcast $f_O$ value and the associated timestamp and rate of change.) Thus, the transmit frequency ($f_T$) = $f_N$ - $f_O$. However, unless the mobile station is actually on the contour, $f_O$ will not accurately reflect the Doppler shift experienced. Thus, the receive frequency ($f_R$) at the mobile station = $f_T$ + $f_D$ = $f_N$ + $f_D$ - $f_O$ where $f_D$ is the actual Doppler shift.

When sending a signal to a satellite 3a, 3b in a random access channel, the mobile station 4 tunes its transmission to $f_R$ so that its transmission is received at the satellite with a frequency of $f_N$ + $2f_D$ - $f_O$. The precompensation scheme limits the magnitude of $f_D$ - $f_O$ for a mobile station 4a moving at less than 100km/hand the random access channel receiver bandwidth can be set according to this value.

It can be seen, however, that as the speed of the mobile station increases, $f_D$ will increase until $f_N$ + $2f_D$ - $f_O$ is not within the bandwidth of the satellite's random access channel receiver.

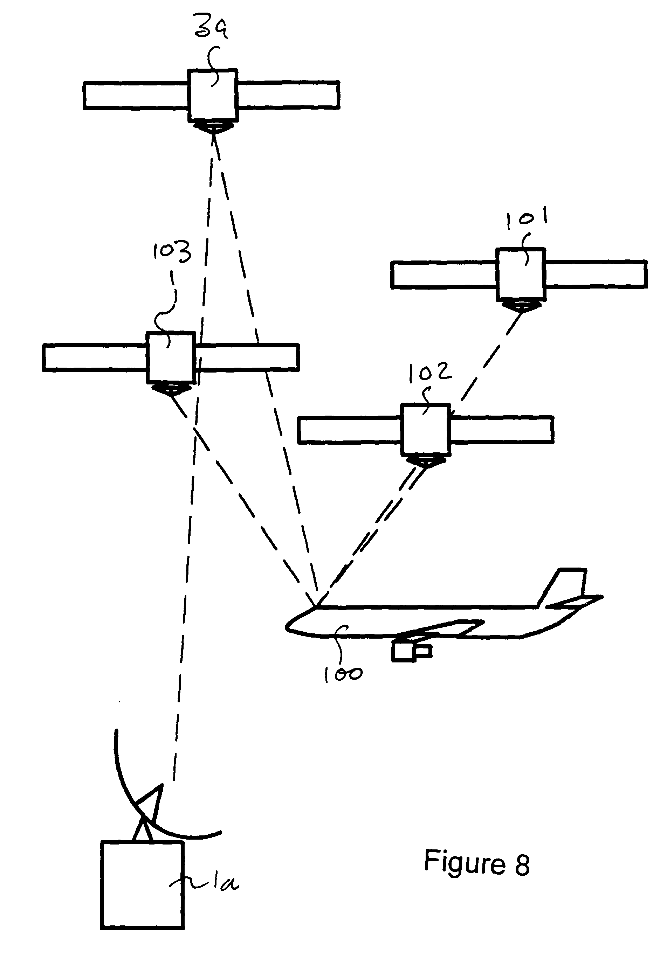

Considering now the situation shown in Figure 8, the mobile station located in the airliner 100 is moving at a speed of 650 km/h which means that the Doppler correction information being transmitted by the first satellite access node 1a in the broadcast control channel serving the airliner 100 is invalid for the mobile station in the airliner. When the mobile station in the airliner 100 is in idle mode this does not affect the mobile station's ability to receive the broadcast control channel because the mobile station can fine tune itself to the Doppler-shifted broadcast control channel frequency. As explained above, a problem does arise, however, when the mobile station needs to send a signal in the random access channel, e.g. to setup a mobile originating call or request a location update. The mobile station can also receive GPS signals from three GPS satellites 101, 102, 103.

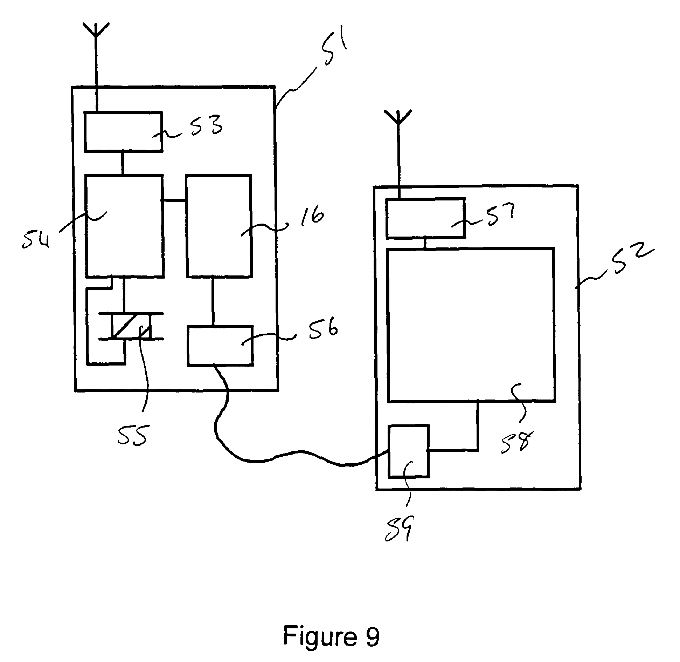

Referring to Figure 9, the mobile station on the airliner 100 comprises a mobile telephone 51 and a GPS (Global Positioning Satellite) device 52. The mobile telephone 51 is substantially as shown in Figure 2. The radio frequency interface comprises a power amplifier and front end circuitry 53 and a frequency synthesizer 54 acting as the exciter for transmission and a local oscillator for superheterodyne reception. The synthesizer 54 has a reference crystal oscillator 55. The mobile telephone 51 differs from that shown in Figure 2 in that it includes an RS-232 interface 56 and the controller 16 is programmed to communicate with the GPS device 52 via the RS-232 interface and to perform the calculation and control processes described below. The GPS device 52 comprises a radio receiver 57 for receiving signals from GPS satellites, a processor 58 and an RS-232 interface 59.

The satellite 3a broadcasts its position, velocity and acceleration in the broadcast control channels of the cells that it serves using earth centred earth fixed (ECEF) co-ordinates. This information is valid for two minutes and is timestamped. The repeat period for the transmission of this information is set to much less than 2 minutes, e.g. 20s. The mobile telephone 51 receives the broadcast control channel information and the mobile station's velocity from the GPS device 52.

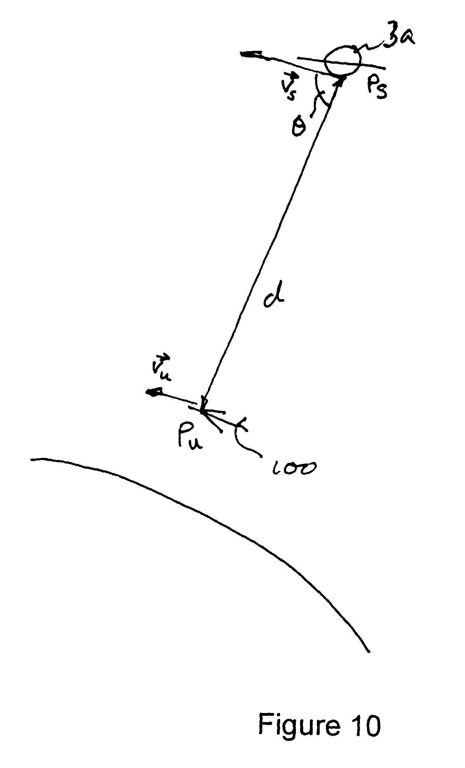

Referring to Figure 10, in the mobile station's reference frame, the velocity vector of the satellite 3a is the sum of the vector sum of the velocities of the mobile station and the satellite 3a in ECEF co-ordinates. Thus:-

$$\vec{v}_S' = \vec{v}_S - \vec{v}_U = (x_{vS} - x_{vU})\hat{x} + (y_{vS} - y_{vU})\hat{y} + (z_{vS} - z_{vU})\hat{z} = v_1\hat{x} + v_2\hat{y} + v_3\hat{z} \tag{1}$$

where $vS$ indicates a component of the satellite's velocity and $vU$ indicates a component of the mobile station's velocity.

The component of the velocity of the satellite towards to mobile station is obtained from:-

$$\dot{d} = \left| \vec{v}_S' \right| \cos\theta \tag{2}$$

where $\theta$ is the angle between the satellite velocity vector (in the mobile station's reference frame) and the vector from the mobile station to the satellite.

Now let

$$\vec{d} = P_S - P_U = (x_{Sp} - x_{Up})\hat{x} + (y_{Sp} - y_{Up})\hat{y} + (z_{Sp} - z_{Up})\hat{z} = d_1\hat{x} + d_2\hat{y} + d_3\hat{z} \tag{3}$$

where $\vec{d}$ is the vector defining the position of the satellite relative to the mobile station.

In order to determine the Doppler shift, it is necessary to determine the component of the satellite's velocity towards the mobile station. Using the cosine rule:-

$$\cos\theta = \left[ \frac{\left|\vec{v}_S{}'\right|^2 + \left|\vec{d}\right|^2 - \left(\left|\vec{v}_S{}' + \vec{d}\right|\right)^2}{2\left|\vec{v}_S{}'\right|\left|\vec{d}\right|} \right] \quad (4)$$

$$\dot{d} = \left|\vec{v}_S{}'\right| \left[ \frac{\left|\vec{v}_S{}'\right|^2 + \left|\vec{d}\right|^2 - \left(\left|\vec{v}_S{}' + \vec{d}\right|\right)^2}{2\left|\vec{v}_S{}'\right|\left|\vec{d}\right|} \right] = \frac{\left|\vec{v}_S{}'\right|^2 + \left|\vec{d}\right|^2 - \left(\left|\vec{v}_S{}' + \vec{d}\right|\right)^2}{2\left|\vec{d}\right|} \quad (5)$$

The Doppler shift is then obtained from:-

$$f_D = \frac{c f_T}{c - \dot{d}} \quad (6)$$

The satellite velocity component values are calculated from the broadcast velocity values, the broadcast acceleration values and the time elapsed since the timestamp of the most recently received satellite velocity and acceleration data using:-

$$\vec{v}_S = \vec{u}_S + \vec{a}_S t \quad (7)$$

where $u$ is the broadcast velocity, $a$ is the broadcast acceleration and $t$ is time.

The data from the GPS device 52 is in terms of longitude and latitude. Consequently, the controller 16 must convert the GPS data into values using ECEF co-ordinates.

The mobile station tunes to the broadcast control channel of the serving cell and has therefore values for the received frequency ($f_R$) available from the synthesizer setting.. However, the accuracy of this value will be limited in accuracy by the error in the frequency of its reference oscillator 55.

The mobile station uses the reference oscillator 55 to set the frequency of its transmitter and as the reference for its receiver local oscillator. Consequently, the values $f_N$, $f_D$ and $f_O$ need to be modified by the factor A = $f_{Rmeasured}$ /($f_N$ + $f_D$ - $f_O$) to give $f_N'$, $f_D'$ and $f_O'$ which can be used to determine the tuning instruction ($\equiv f_N' + f_O' - f_D'$) for the mobile station's synthesizer 54 to transmit in the random access channel for location updates and to request a channel for a mobile originating call. Of course, if the master oscillator of the mobile station is of sufficient accuracy, there is no need to determine the factor. The factor A also has the effect of compensating for tuning errors at the satellite 3a.

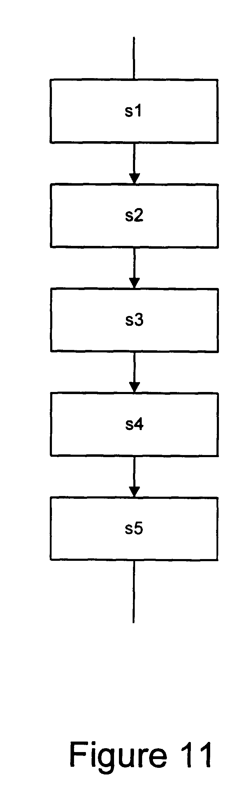

Thus, referring to Figure 11, the steps performed by the mobile station, when operating in idle mode, to generate a tuning instruction are as follows:-

    (a) receive satellite position, velocity and acceleration data from the satellite 3a (step s1);
    (b) obtain position and velocity data for the mobile station from the GPS device 52 (step s2);
    (c) calculate the expected Doppler shift ($f_D$) are according to equation 1 to 6 (step s3);
    (d) calculate factor A (step s4); and
    (e) generate a tuning command on the basis of the desired frequency and the factor A (step s5).

Step (a) maybe performed less frequently than step (b), in which case the velocity of the satellite is determined according to equation 7.

When the mobile station is operating in dedicated mode, it receives the Doppler information in the slow associated control channel and its controller 16 controls its transmitter tuning as described above, i.e. the synthesizer 54 is instructed to tune to $f_N' + f_O' - f_D$. where $f_N$ is the nominal uplink traffic channel centre frequency at the satellite 3a. The effect of this is to make the mobile station appear to be on a Doppler shift reference contour.

A radio link failure is identified by the controller 16, if the mobile station does not receive the Doppler and satellite motion information for two minutes. Also a failure is identified by the controller 16, if the mobile telephone 51 has not received GPS data for 2 seconds.

In the case of a stationary mobile station, the satellite access node triggers a handover to another cell on the basis of the frequency and timing offset of signals from the mobile station. However, this is not possible in the case of a mobile station moving at high speed, according to the present invention, because the mobile station is pre-compensating for Doppler shift so that it always appears to be transmitting from a reference constant Doppler shift contour. To overcome this, the mobile telephone 51 transmits the mobile station's position, obtained from the GPS device 52, to the satellite access node 1a in the slow associated control channel. The transmission of the mobile station's position may be triggered by the elapse of a predetermined period, movement of the mobile station by a predetermined distance or comparison of the mobile station's position vis-à-vis the current cell indicating that the mobile station is approaching the edge of the cell. Alternatively, the network could request the mobile station's position using a position request message transmitted in the slow associated control channel.

If the satellite access node 1a determines that the mobile station must be handed over to another cell served by the same satellite, the satellite access node 1a transmits a handover command including the $f_O$ value for the new cell in the slow associated control channel. The mobile station's controller 16 can then determine the appropriate tunings for transmission and reception using the current factor A value.

If on the other hand the handover is to a cell served by another satellite, the satellite access node 1a sends handover command message which includes a special measurement request, $f_O$ for the new cell and the position, velocity and acceleration data for the new satellite, to the mobile station in the slow associated control channel. The mobile station's controller 16 then determine the appropriate tunings for transmission and reception using the factor A. Allowance for differences in tuning accuracy between the satellites by recalculating A on the basis of the measured receive frequency of the broadcast control channel from the new satellite rather than using the last calculated value for the cell to be departed from.

The mobile station can then send access bursts in the allocated channel of the cell to which it is being handed over.

## Claims

1. A method of operating a mobile station in a satellite mobile telephone system, the method comprising the steps of:-

   obtaining mobile station data defining the position and velocity of the mobile station;
   calculating the Doppler shift for transmissions between the mobile station and a satellite from the mobile station data and satellite data defining the position and velocity of the satellite; and
   transmitting to a satellite using a frequency determined by said calculated Doppler shift so as to pre-compensate for Doppler shift affecting the transmission.

2. A method according to claim 1, comprising the step of receiving the satellite data from a satellite.

3. A method according to claim 2, wherein the satellite data defines additionally the position and velocity of a further satellite.

4. A method according to claim 2 or 3, wherein the satellite data is received in a broadcast control channel.

5. A method according to claim 4, wherein the transmission to a satellite comprises transmitting in a random access channel to the satellite that transmitted the satellite data.

6. A method according to claim 2, wherein the satellite data is received in a control channel during dedicated mode operation.

7. A method according to claim 6, wherein the transmission to a satellite comprises transmitting in a traffic channel to the satellite that transmitted the satellite data.

8. A method according to claim 7, wherein the transmission to a satellite comprises transmitting to a satellite other than the satellite that transmitted the satellite data.

9. A method according to any preceding claim, wherein the mobile station data is obtained from a navigation apparatus.

**10.** A method according to claim 9, wherein the navigation apparatus is a GPS terminal apparatus.

**11.** A method according to any preceding claim, wherein the satellite data comprises position and velocity data for a satellite.

**12.** A method according to claim 11, wherein the satellite data includes acceleration data for the satellite and a timestamp.

**13.** A method according to any preceding claim, including propelling the mobile station at a speed not less than 100km/h while said transmission to a satellite is being performed.

**14.** A mobile station for a satellite mobile telephone system, the mobile station including a controller programmed to cause the mobile station to operate according to a method according to any preceding claim.

**15.** A mobile station according to claim 13, including mobile telephone, a navigation apparatus and communication means for effecting communication between the mobile station and the navigation apparatus.

**16.** A mobile station according to claim 15, wherein the navigation apparatus comprises a GPS terminal device.

**17.** A combination of mobile station according to any one of claims 14, 15 and 16 and transport means for propelling the mobile station at a speed not less than 100km/h.

**18.** A combination according to claim 17, wherein the transport means comprises an aircraft.

Figure 1

Figure 2

Figure 3

Figure 4

Relative Path Delay for Satellite at 10,355 Km. Altitude

Figure 5

Mobile-Link Doppler on Ground Track for Satellite at 10,355 Km. Altitude

Figure 6

Figure 7

Figure 8

Figure 9

Figure 10

Figure 11

European Patent Office

**EUROPEAN SEARCH REPORT**

Application Number

EP 99 30 2487

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y | US 5 874 913 A (BLANCHARD SCOTT DAVID ET AL) 23 February 1999 (1999-02-23)<br>* abstract *<br>* column 5, line 20 - column 6, line 8 *<br>* figure 2 *<br>* claims 1,7 * | 1,9-11,<br>14-16<br>2,4 | H04B7/185 |
| X | US 5 689 245 A (HARPER THEODORE R ET AL) 18 November 1997 (1997-11-18)<br>* abstract *<br>* column 3, line 46 - column 4, line 3 *<br>* column 6, line 48-60 *<br>* column 14, line 33 - column 15, line 2 *<br>* column 17, line 4-14 *<br>* column 18, line 60 - column 19, line 13 *<br>* column 21, line 8-24 *<br>* figure 1 * | 1,9,10,<br>13-18 | |
| Y | EP 0 892 506 A (ICO SERVICES LTD) 20 January 1999 (1999-01-20)<br>* page 2, line 26-35 *<br>* page 4, line 44 - page 5, line 3 *<br>* claims * | 2,4 | TECHNICAL FIELDS SEARCHED (Int.Cl.7)<br><br>H04B |

The present search report has been drawn up for all claims

| Place of search | Date of completion of the search | Examiner |
|---|---|---|
| THE HAGUE | 4 August 1999 | Dejonghe, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 30 2487

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-1999

| Patent document cited in search report | | Publication date | Patent family member(s) | | Publication date |
|---|---|---|---|---|---|
| US 5874913 | A | 23-02-1999 | NONE | | |
| US 5689245 | A | 18-11-1997 | US | 5455823 A | 03-10-1995 |
| EP 0892506 | A | 20-01-1999 | EP | 0902552 A | 17-03-1999 |
| | | | JP | 11074828 A | 16-03-1999 |